# EUROPEAN PATENT SPECIFICATION

(11) **EP 2 616 510 B1**
(45) Date of publication and mention of the grant of the patent: **07.01.2015**
(21) Application number: 11760746.5
(22) Date of filing: 14.09.2011
(51) Int. Cl.: C08L 3/12

(54) **POLYSACCHARIDE COATING WITH GEL PARTICLES**
POLYSACCHARIDBESCHICHTUNG MIT GELPARTIKELN
REVÊTEMENT POLYSACCHARIDIQUE AVEC PARTICULES GÉLIFIÉES

(30) Priority: 14.09.2010 SE 1050960; 14.09.2010 SE 1050959
(43) Date of publication of application: 24.07.2013
(73) Proprietor: Lyckeby Starch AB, 291 91 Kristianstad (SE)
(72) Inventor: SVENSSON, Sigfrid, 291 97 GÄRDS KÖPINGE (SE)
(74) Representative: Kånge, Lars Rikard
(86) International application number: PCT/EP2011/065908
(87) International publication number: WO 2012/035046

(56) References cited:
- WO-A1-88/10156
- WO-A1-95/25604
- WO-A1-95/25605
- US-A- 5 093 485

## Description

### Field of the invention

The present invention relates to aqueous coating compositions comprising at least one polysaccharide or a derivative thereof. The invention also relates to the use of an aqueous coating composition for temporary protection of a substrate from contamination and/or degradation. Furthermore, the invention relates to a process for the preparation of an aqueous coating composition and it also relates to a process for protecting a substrate from contamination and/or degradation and facilitating removal of contamination therefrom.

### Background

Protective films or coatings comprising polysaccharides are useful in many different applications, such as the protection of all types of surfaces from so called graffiti, traffic pollution, bird droppings, etc. Another application for such coatings is the temporary protection of the exterior of vehicles, such as cars, during transportation and handling. Today, protective tape is commonly used for protection of the exterior of the vehicles. The tape is manually placed on the surfaces to be protected and the procedure is both laborious and expensive.

Recent developments, described for example in European patent application EP 0 751 836, have shown that the stability of polysaccharides against weathering can be improved by generating coating systems in which the coating product based on polysaccharides is transformed from liquid into gel in the process of drying into a protective film coating .

In European patent EP 0 365 584 B1 there is described a contamination removal process based on the use of a solution containing a polysaccharide and a solvent therefore for creating a protective coating on a surface. After being subjected to contamination, the surface can easily be freed from the contamination by treating the coated surface with a liquid, which is capable of re-dissolving the protective coating. A problem with this solution comprising polysaccharides is that the concentration of polysaccharides in the solution may be limited. When increasing the concentration of polysaccharides, the viscosity of the solution increases rapidly. A high viscosity of the solution may make the solution difficult to apply to a surface using conventional techniques, such as spraying.

In US 5 948 545 there is described a method for protecting a surface from contamination and for facilitating removal thereof using a solution of at least one polysaccharide and a second polysaccharide, wherein the second polysaccharide or a mixture of the first and the second polysaccharide is capable of gel formation. The first polysaccharide is added to the solution to inhibit gel formation in order to allow a higher polysaccharide concentration in the composition while avoiding premature gel formation. A problem is that a film formed of such a solution may have poor stability when exposed to moisture.

Therefore, there is a demand for a new aqueous composition comprising polysaccharides which produces protective coatings of sufficient thickness, but without the drawbacks of high viscosity, premature gel formation and poor stability of film associated with prior art methods.

### Description of the invention

It is an object of the present invention to alleviate at least some of the problems associated with the prior art techniques.

It is another object of the invention to provide a protective film, or coating, which has improved stability towards moisture, for example rain, compared to prior art compositions comprising polysaccharides.

Yet another object of the invention is to provide a protective film, or coating which may be easily removed from a surface on which it has been applied.

The above mentioned objects, as well as other objects that will be apparent to a person skilled in the art when presented with the present disclosure, are accomplished by the different aspects of the present invention.

In a first aspect thereof, there is provided an aqueous coating composition comprising a mixture of
(i) at least one polysaccharide or a derivative thereof in aqueous solution and
(ii) a plurality of polysaccharide gel particles,
said composition being capable of forming a film when applied onto a substrate.

The term "polysaccharide", as referred to herein, means a polymer molecule comprising at least three monosaccharide repeating units connected by glycoside linkages, the monosaccharide repeating units may be the same, i.e. homopolysaccharide, or different, i.e. a heteropolysaccharide. The polymer chain may be straight or branched.

The term "gel", as referred to herein, means a substantially dilute crosslinked system. The crosslinks can for example be physical (e.g. electrostatic), chemical (e.g. covalent), crystallites or other junctions. By weight, gels are mostly liquid, yet they behave like solids due to a three-dimensional crosslinked network within the liquid.

The term "polysaccharide gel", as referred to herein, means gel formed by one or more polysaccharides or derivatives thereof.

The term "polysaccharide gel particles", as referred to herein, means particles which comprise a polysaccharide gel.

The present invention makes use of the advantage of gel formation of polysaccharides as an intermediate step in the process of obtaining a water resistant protective polysaccharide coating or film.

The film formed by an aqueous coating composition according to the present invention may be formed by evaporation of aqueous solvent. When a composition according to the present invention has been applied to a surface, aqueous solvent, for example water, will evaporate from the film and result in an increase in the concentration of the polysaccharides in the film and the concentration will eventually reach a critical point at which gel formation occurs. This critical point is important in the preparation and use of polysaccharide coatings. The gel formation results in a significant increase in the stability of the film. Evaporation of water may proceed until an equilibrium water content in the film has been reached. The gel formation should preferably occur during the evaporation of the remaining solvent in the coating before a solid film is formed on a substrate. If gel formation occurs too soon, i.e. before sufficient wetting of the substrate, the properties of the protective film, in terms of coverage and adhesion, may be adversely affected. If gel formation does not occur before the film is formed, the water resistance and mechanical properties of the protective film may be adversely affected.

In order for a protective polysaccharide film to be effective, the thickness of the film has to be sufficient. Sufficient film thickness can generally be achieved in two ways. The first way is by repeated application of the solution to the surface resulting in the successive build-up of a film of sufficient thickness. Such a method carries the obvious disadvantage of having to apply the solution several times and allowing the film to dry between the applications, making the coating procedure time-consuming and expensive. The second way is by a single application of a solution having a sufficient dry weight of polysaccharide to provide a sufficiently thick film. However, an increase in the dry weight of polysaccharide may result in an increase in the viscosity of the solutions, making coating of the solutions using conventional coating techniques difficult.

When a polysaccharide of the gel forming type is used alone in the solution, the concentration thereof has to be very low, generally below 3-4% by weight, and preferably below 1 % by weight or lower, to obtain a solution that can be applied to a substrate surface without difficulty due to high viscosity and/or premature gel formation. If the concentration of the polysaccharide is increased to a level which would result in sufficient film thickness when the solution is applied to a substrate, then gel formation may occur and application, by spraying or the like, can constitute a severe problem. The coating composition in accordance with the present invention comprising a plurality of polysaccharide gel particles provides a solution to this problem.

The composition of the present invention allows a high total concentration of polysaccharides in the composition without the disadvantage of very high viscosity of the composition. The polysaccharide gel particles of the present invention have the advantage of a significantly lower contribution to the total viscosity of the solution as compared to a corresponding amount of polysaccharide in aqueous solution. Thus, a relatively high amount of polysaccharide gel particles may be added to the solution with only a relatively low overall increase in the viscosity of the composition. The present invention may allow total polysaccharide concentrations of up to 30% (w/v) based on dry weight of polysaccharide, as compared to prior art polysaccharide solutions which are generally limited to concentrations below 3-4% in order to maintain an acceptable viscosity in the solution.

An advantage of the present invention as compared to the compositions and methods of the prior art, is that it provides for obtaining a thick film with one application only without compromising the stability of the film towards water at room temperature.

The stability towards water of a protective film, or coating, formed of a composition comprising polysaccharides may depend on the degree of gel formation in the film. The present inventor has found that the presence of pre-formed polysaccharide gel particles can improve the degree of gel formation in the protective film and thus the stability of the film towards water. It may be difficult to obtain a homogenous and high degree of gel formation when using a composition comprising only polysaccharides in solution. When supplying a component in the form of pre-formed polysaccharide gel particles to the composition, a higher degree of gel formation in the film may be obtained. Stability towards water is an important property of a protective polysaccharide film since the film may often be subjected to moisture, rain or condensation during normal use.

The present inventor has surprisingly found that a high amount of polysaccharide gel particles may be added to the composition without impairing the properties of the solid protective film in terms of mechanical strength and stability towards water. Instead, a film formed of an aqueous coating composition according to the present invention may be even more stable towards water compared to films formed from polysaccharide compositions present in the prior art. After drying of the film, the dried polysaccharide gel particles may be embedded in the polysaccharide film formed by the polysaccharides in solution. This type of mixed film comprising both polysaccharides and polysaccharide gel particles may be more resistant towards moisture, for example rain, due to reduced swelling and the insolubility of the dried gel particles.

A further advantage is that a high dry weight of polysaccharide in the composition may reduce the drying time of the formed coating, since the water content in the composition is low. This is especially advantageous where products comprising a polysaccharide film are prepared, and the drying of the coated or impregnated surface forms an integral step in the production process. The time and/or energy for drying a coated or impregnated surface may be substantially reduced by the use of high concentration polysaccharide compositions made possible by the present disclosure.

In order to further stabilize a film formed from a polysaccharide solution mixed with polysaccharide gel particles, the film may be subjected to an elevated temperature causing the polysaccharide gel particles to at least partially dissolve or melt and mix with the polysaccharides in solution. The elevated temperature may be provided before, during or after drying of the coating, preferably during drying of the coating. If the drying of the mixed polysaccharide gel particles and the polysaccharide solution is performed at a temperature above a temperature at which the polysaccharide gel particles at least partially dissolve or melt, the resulting film may become even stronger.

In an embodiment, the aqueous coating composition is capable of forming a film via at least partial gel formation when applied to a surface. In another embodiment, the at least one polysaccharide or a derivative thereof in solution is capable of forming a film via at least partial gel formation. Gel formation may occur by a number of different mechanisms, but the exact mechanism of the gel formation is not of essence to the present invention. Gel formation also depends on temperature and concentration of polysaccharides in the composition, for example the polysaccharides in aqueous solution. The skilled person will recognize which polysaccharides and mixtures of different polysaccharides that may be subject to gel formation.

A film formed by an aqueous composition comprising polysaccharides in aqueous solution and polysaccharide gel particles can be made more stable towards rain, for example warm rain or warm rain falling with a high speed, compared to a film formed by a composition comprising polysaccharides in an aqueous solution without the addition of polysaccharide gel particles. On the other hand, a film formed on a substrate using a composition as disclosed herein is preferably removable from the substrate using hot water, such as water having a temperature of 40 °C or higher, optionally at elevated pressure or combined with rubbing or brushing. This combination of properties can be achieved by providing at least partial gel formation of the polysaccharides in the film. Gel formation reduces the solubility of the film such that it may become insoluble at lower temperatures, whereas it may still be dissolved at higher temperatures.

The total concentration of polysaccharide, i.e. polysaccharides in aqueous solution and polysaccharide gel particles, in the inventive composition will affect the thickness of a film formed by the composition. The higher the concentration, the thicker the protective film. The total concentration of polysaccharide in the solution should preferably be selected such that the viscosity of the solution allows application of the solution to a substrate using conventional coating methods, such as spraying, while resulting in the formation of a polysaccharide protective film having a sufficient thickness. Given the teaching herein, the concentrations of the polysaccharides in solution and polysaccharide gel particles required for each specific composition may be determined by routine experimentation. The gelling concentration for different gel forming polysaccharides is well known or easily accessible to a person skilled in the art.

In some embodiments, the concentration of polysaccharides in aqueous solution of the composition is in the range of 0.1-10% (w/v). For example, the concentration can be in the range of 1-5% (w/v). The upper limit of the concentration of the polysaccharides in aqueous solution may vary depending on the gel forming properties of the polysaccharide used.

In some embodiments, the volume of polysaccharide gel particles in the composition constitutes in the range of 10%-90% of the total volume of the composition, when the polysaccharide gel particles are fully swelled. For example, the volume of polysaccharide gel particles can be in the range of 20%-80%, such as 30%-70% such as 40%-60% of the total volume of the composition, when the polysaccharide gel particles are fully swelled. In yet another example, the volume of polysaccharide gel particles is 50% of the total volume of the composition, when the gel particles are fully swelled.

In some embodiments, the concentration of polysaccharides in the fully swelled polysaccharide gel particles of the composition is in the range of 0.1-5% (w/v). For example, the concentration can be in the range of 1-2% (w/v). The polysaccharide gel particles mainly consists of water. For example, the polysaccharide gel particles can comprise at least 95% of water, such as at least 97% of water, such as at least 99% of water.

Examples of polysaccharides suitable for use as the at least one polysaccharide in aqueous solution in the inventive composition include, but are not limited to algal, microbial and plant derived polysaccharides, and mixtures thereof. In an embodiment, the polysaccharide or a derivative thereof in aqueous solution is selected from the group consisting of agar, carrageenans, gellan gum, pectins, locust bean gum, guar gum, esparto xylan, arabinoxylan, konjac mannan, starch or derivatives thereof, hydroxyethyl cellulose, alginic acid, chitosan, chitin, methylcarboxymethyl cellulose and acetyl cellulose and mixtures thereof. In an embodiment, the polysaccharide or a derivative thereof in aqueous solution is a mixture of agar with guar gum, locust bean gum and/or xanthan gum. In another embodiment, the polysaccharide or a derivative thereof in aqueous solution is a mixture of agar with guar gum and/or locust bean gum.

The polysaccharide gel particles comprise at least one polysaccharide or a mixture of polysaccharides forming a gel when swelled in water or an aqueous solution. The gel is formed due to the presence of crosslinks between the polysaccharide chains. The crosslinks may for example be physical (e.g. electrostatic), chemical (e.g. covalent), crystallites or other junctions.

Examples of polysaccharides that may be employed in the polysaccharide gel particles include polysaccharides selected from the group consisting of algal, microbial and plant derived polysaccharides, and mixtures thereof.

In an embodiment, the polysaccharide employed in the gel particles is selected from the group consisting of agar, carrageenans, gellan gum, pectins, locust bean gum, guar gum, esparto xylan, arabinoxylan, konjac mannan, hydroxyethyl cellulose, starch or derivatives thereof, calcium alginate, chitosan, chitin, methylcarboxymethyl cellulose, acetyl cellulose, and mixtures thereof. In another embodiment, the polysaccharide employed in the gel particles is a mixture of agar with guar gum and/or locust bean gum. The gel particles may generally have a mean average diameter of 5 mm or less. However for practical purposes, a mean average diameter of 1 mm or less, e.g. 500 micrometers or less is preferred. The lower limit of the mean average diameter of the gel particles may generally be about 1 micrometer or more, although for practical reasons a mean average diameter of 10 micrometers or more, e.g. 50 micrometers or more may be more preferred. For example, the polysaccharide gel particles may have a mean average diameter in the range of 1 micrometer to 5 mm, such as in the range of 10 micrometers to 1 mm, or in the range of 50 micrometers to 500 micrometers.

Gel particles suitable for use with the present invention may be obtained by a number of different methods. For example, gel particles can be formed by disrupting or comminuting a larger gel piece using a suitable mixer or by pressing the gel through a sieve or filter having openings of a suitable diameter. Gel particles may also be formed directly from a polysaccharide solution, e.g. by spray drying or by precipitation of droplets of polysaccharide solution in a suitable solvent, e.g. ethanol.

It has been noticed that the incorporation of polysaccharide gel particles in the composition leads to a surprising increase of the stability of the formed coatings to moisture and water. Without wishing to the bound to any specific scientific theory, it is contemplated that the increase in stability may, in part, be due to absorption of polysaccharides in aqueous solution into the polysaccharide gel particles when the composition dries. Polysaccharides or other high molecular weight components may be trapped in the polysaccharide gel particles. This effect may result in a strong connection between the polysaccharide gel particles and the continuous phase formed by the at least one polysaccharide in solution upon drying. When drying the polysaccharides in the solution, a binding matrix for the dried polysaccharide gel particles may be formed.

It has also been found that the stability of a film formed by an aqueous coating composition of the present invention can be further improved if the polysaccharides in solution and the polysaccharide gel particles are capable of attractive interaction with each other. The polysaccharide gel particles may interact with the polysaccharides in solution by physical, chemical and/or physiochemical interactions. Selecting the polysaccharides in solution and the polysaccharide gel particles capable of attractive interaction with each other may increase the mechanical strength and stability of the resulting film. If the polysaccharides in solution can bind to the polysaccharide gel particles, for example via electrostatic or via hydrogen bonding, the resulting film may become stronger.

In an embodiment, the at least one polysaccharide or a derivative thereof in aqueous solution and the polysaccharide gel particles are capable of attractive interaction with each other. For example, the attractive interaction may be covalent bonding, ionic bonding, electrostatic forces, dipole-dipole interaction, London dispersion forces, and hydrogen bonding. In an embodiment, the attractive interaction is electrostatic forces or hydrogen bonding. The attractive interaction may be present between the at least one polysaccharide in solution and the polysaccharide of the gel particles. For example, if the polysaccharide gel particles or a compound thereof have a negative net charge, an aqueous solution of a positively charged polymer may be added. In another example, if the polysaccharide gel particles or a compound thereof have a positive net charge, an aqueous solution of a negatively charged polymer may be added.

In some embodiments, the capability of attractive interaction between the polysaccharides in solution and the polysaccharide gel particles may be increased by the introduction of an additional component in the polysaccharide gel particles, for example chitosan, polyethyleneimide, etc, which component is capable of attractive interaction with the polysaccharides in solution. In other embodiments, the capability of attractive interaction between the polysaccharides in solution and the polysaccharide gel particles is increased by the introduction of an additional component in aqueous solution, which component is capable of attractive interaction with the polysaccharide gel particles.

In an embodiment, the aqueous coating composition may further comprise at least one polymeric polyamino compound in order to provide for better adherence to surfaces. For example, the polymeric polyamino compound may be selected from proteins, polysaccharides and derivatives thereof containing amino functions, and aliphatic polymers containing amino functions. In other examples, the polymeric polyamino compound is a soluble cellulose or starch derivative containing amino functions. In yet another example, the polymeric polyamino compound is chitosan or an aliphatic polymer containing amino functions. Preferably, the polymeric polyamino compound is polyethyleneimine.

The polymeric polyamino compound may be present in the aqueous solution, in the polysaccharide gel particles, or both.

The concentration of the polymeric polyamino compound in the composition can be in the range of 1-10% (w/v), preferably 1-5% (w/v).

An advantage of introducing gel particles in a composition comprising polysaccharides in solution is that shrinkage and expansion properties of the formed polysaccharide films may be reduced. These shrinkage and expansion properties of the film can cause damage to a sensitive substrate when a polysaccharide composition is applied onto a substrate and is allowed to form a film. The shrinkage and expansion occurs when a polysaccharide film is dried and wetted.

In one embodiment of the present disclosure, the aqueous coating composition further comprises a water-repellent substance. The term "water-repellent substance", as referred to herein, means a substance which is at least partly hydrophobic and at least partly insoluble in water. The water-repellent substance is preferably semisolid or solid at 20°C. The water-repellent substance may for example have a melting point of 30°C or higher, such as 40°C or higher, such as 50°C or higher or such as 60°C or higher. An aqueous composition according to the present disclosure may comprise up to 30 % (w/v) of the water-repellent substance. The concentration of the water-repellent substance may for example be in the range of 1-30 % (w/v), such as in the range of 1-20 % (w/v) or in the range of 1-10 % (w/v). In an embodiment, the concentration of the water-repellent substance is in the range of 1-10 % (w/v).

The introduction of a water-repellent substance into an embodiment of the aqueous coating composition has been found to reduce damages on sensitive surfaces caused by the formation of the polysaccharide film, possibly due to shrinkage and expansion upon drying and rewetting. This finding is surprising and may greatly improve the usefulness of polysaccharide protective films for sensitive surfaces, such as freshly painted or varnished surfaces.

By using a composition according to an embodiment of the present invention, which comprises polysaccharides in solution, polysaccharide gel particles and also a water-repellent substance, we can combine the advantages of strengthening the polysaccharide film and at the same time reducing the risk of damaging sensitive surfaces which are coated with the composition. For example, this type of composition can be used for temporary protection of the exterior of vehicles, such as cars, for example during transportation and handling.

The water-repellent substance may be selected from the group consisting of waxes and fats. The wax or fat may be suspended or emulsified in the aqueous coating composition, for example in the polysaccharide solution. Preferably, the water-repellent substance is a wax.

The term "wax", as referred herein, means a substance which has a waxy consistency. A wax can be semi-solid or solid at 20°C and can have a melting point of 30°C or higher, such as such as 40°C or higher, such as 50°C or higher or such as 60°C or higher, without decomposing.

The water-repellent substance may for example be an animal wax, a vegetable wax, a mineral wax or a synthetic wax, and mixtures thereof. Examples of animal waxes include, but are not limited to beeswax, lanolin, lanocerin, shellac and ozokerite, and mixtures thereof. Examples of vegetable waxes include, but are not limited to carnauba, candellila, jojoba, ouricury, and mixtures thereof. Examples of mineral waxes include, but are not limited to montan, paraffin, microcrystalline wax and ceresin, and mixtures thereof. Examples of synthetic waxes include, but are not limited to polypropylene (PP), polyethylene (PE) and polytetrafluoroethylene (PTFE), Fischer-Tropsch wax, substituted amide wax, polymerized α-olefins and chemically modified wax, and mixtures thereof. The chemically modified wax may be esterified or saponified. PP, PE and PTFE are not technically waxes but are often associated with this class of substances since they provide similar effects and performance. For example, the water-repellent substance can be microcrystalline wax.

Since the water-repellent substance is generally at least partially insoluble in water, it may preferably be dispersed or suspended in the aqueous coating composition. In an embodiment, the water-repellent substance may be present as dispersed particles in the aqueous coating composition. The particles of said water-repellent substance may preferably have a mean average diameter in the aqueous composition of about 1 nm-1000 µm, such as about 10 nm-10 µm, such as about 50 nm-1 µm or such as about 100 nm-500 nm. In embodiments, the mean average diameter of the particles of the water repellent substance may also be larger, such as in the range of 10 µm-1 000 µm or 100 µm-500 µm. At elevated temperatures the water repellent substance may form an emulsion of droplets of the water repellent substance in the aqueous phase.

Suspensions or dispersions of the water repellent substance in water may be achieved in various ways as recognized by a person skilled in the art. Examples include adding finely powdered wax or fat to water or polysaccharide solution under vigorous stirring to generate a suspension, melting wax or fat and adding the melt, under vigorous stirring, to water or a polysaccharide solution at a temperature above the melting point of the wax or fat, or dissolving wax or fat in a solvent miscible with water and adding the dissolved wax or fat into water or polysaccharide solution under vigorous stirring to form a suspension.

An aqueous coating composition according to the various embodiments described herein, comprising at least one polysaccharide in solution, a plurality of gel particles, and, optionally, a water-repellent substance, for example microcrystalline wax particles, may further comprise both watersoluble additives such as buffer systems and lipophilic additives such as lipophilic antioxidants, insecticides or fungicides.

The aqueous coating composition according to the present invention may further comprise at least one buffering system acting to protect the coated surfaces against alkaline or acidic pollutants. A suitable buffering system counteracts changes in the pH of the film caused by exterior influence. This is suitable particularly to withstand the influence of environmental conditions, such as acid rain, bird droppings, and other conditions involving acid or basic pH. Other examples include natural pollution, particles, brake dust, acid rain, acid soot and organic solvents. The buffering system can be added to an aqueous coating composition comprising polysaccharides and polysaccharide gel particles and optionally a water-repellent substance and other components. The buffering system may be present in the polysaccharide solution and/or in the polysaccharide gel particles.

For example, the buffering system may comprise a low molecular weight buffering compound. For example, the low molecular buffering compound can be glycine or an inorganic buffer such as for example a phosphate buffer. The amount of the buffering system may be within the range of about 2% (w/v) to about 5% (w/v). The pH of the composition may be within the range of from about 5 to about 9.

In various embodiments, the composition may comprise additives for improving the properties of the composition and of the protective films formed thereof. In an embodiment, the aqueous coating composition may further comprise at least one additive selected from the group consisting of an anti-foaming agent, a plasticizer, a surfactant and an antimicrobial agent. The addition of an anti-foaming agent is particularly advantageous in compositions comprising high concentrations of polysaccharides, since such compositions result in relatively thick films when applied to substrates. Bubbles remaining in the film when solvent evaporates may lead to the formation of pin-holes in the solid film. Pin-holes increase the permeability of the film to contamination. This problem is accentuated when the film is applied in a single application. The addition of an anti-foaming agent reduces the pin-hole formation in thick polysaccharide films. Examples of suitable anti-foaming agents include n-octanol or similar higher aliphatic alcohols, although any suitable anti-foaming agent may be used.

In an embodiment of the invention, the aqueous coating composition further comprises a plasticizer. Plasticizers help make the resulting film flexible. This is important in order to eliminate the formation of cracks in the film during the drying process. Cracks increase the permeability of the film to contamination. The addition of a plasticizer is particularly advantageous in compositions comprising high concentration of polysaccharides, since such compositions result in relatively thick films that may be prone to crack formation during drying. Examples of suitable plasticizers include glycerol, polyglycerols, dimethylsulphoxide, and dimethylformamide, although any suitable plasticizer may be used.

In an embodiment, the aqueous coating composition further comprises a surfactant. Surfactants reduce the surface tension of the aqueous coating composition and facilitates spreading of the composition on a substrate and the filling of pores present in the substrate. A person skilled in the art may select a surfactant suitable for use with the present invention.

In an embodiment, the aqueous coating composition further comprises an antimicrobial agent and/or a preservative. An antimicrobial agent may reduce decay of the composition or film thereof due to microbial activity. Examples of suitable antimicrobial agents include benzoates, such as methyl paraben.

In an embodiment, the aqueous coating composition further comprises a herbicide, insecticide, bactericide, and/or fungicide. The herbicide, insecticide, bactericide, and/or fungicide can be mixed with the rest of the composition and can be introduced into the polysaccharide solution, polysaccharide gel particles and/or the water-repellent substance.

A composition according to the present invention may also be used in a process for protecting plant parts against microorganisms (for example bacteria and fungi) and insects. The composition may be applied to relevant plant parts (roots, stems, leaves or fruits) and allowed to dry at ambient temperature. For edible parts of the plant it may be necessary to remove the protective coating using water at elevated temperature and the washing procedure may also remove chemicals used for the protection of the plant parts.

In an embodiment, an additive, such as a pigment, insecticide, herbicide, fungicide or antioxidant, present in the composition is incorporated in the polysaccharide gel particles. Because the gel particles are generally less prone to swelling and/or dissolution than the continuous phase formed by the at least one polysaccharide in solution, additional components incorporated in the gel particles may be less sensitive to being washed out of the coating. Incorporating additional components in the gel particles may also reduce the direct contact of the components with the substrate to be protected.

In an embodiment thereof, the composition of the present invention may be present in the form of a concentrate which may be diluted before use with a suitable solvent, e.g. water, to a desired final concentration. A concentrate of the composition can have the advantage of facilitating and reducing costs for packaging and transportation of the product.

The inventive composition may advantageously be used for providing protection to surfaces against non-desired contamination, such as from so called graffiti, traffic pollution, bird droppings, etc. Therefore, in a second aspect thereof, the present invention provides the use of an aqueous coating composition of the present invention for protecting a substrate from contamination and facilitating removal of contamination therefrom. Use of the inventive composition according to the second aspect of the invention allows the formation on substrates of protective films having a sufficient thickness and stability towards water at room temperature with a single coating application, significantly reducing the costs for protecting surfaces.

A film formed by an aqueous coating composition according to the present invention may be removable when using for example hot water or steam and may achieve no permanent bonding to the surface. This allows for efficient temporary protection and rapid removal. The aqueous coating composition of the present invention may for example be used for temporary protection of the exterior of a vehicle during handling and transportation. The removal of the film may be performed under such conditions, such as limited temperature, pressure and time, that the substrate surface is not damaged. The gel can be removed in an environmentally friendly way, using e.g. water at high temperature. Another possibility is to use water at an increased pressure which usually involves pressure washing with a steam of water.

The present invention also provides for the use of the inventive composition for the protection of plant seedlings from microbial or insect attack. A composition for such use may advantageously further comprise a herbicide, insecticide, bactericide, and/or fungicide.

In a third aspect thereof, the present invention provides a process for the preparation of an aqueous coating composition suitable for protection of surfaces comprising the steps of
a) dissolving a least one polysaccharide or a derivative thereof in aqueous solution;
b) preparing a plurality of polysaccharide gel particles;
c) adding the plurality of polysaccharide gel particles to the aqueous solution of at least one polysaccharide or a derivative thereof; and
d) mixing the at least one polysaccharide or a derivative thereof in aqueous solution with the plurality of polysaccharide gel particles, and optionally other components.

The composition of the third aspect may comprise any feature mentioned herein in relation to the composition of the first aspect of the invention. The plurality of polysaccharide gel particles can be prepared by a number of different methods. For example, gel particles can be formed by disrupting or comminuting a larger gel piece using a suitable mixer or by pressing the gel through a sieve or filter having openings of a suitable diameter. Gel particles may also be formed directly from a polysaccharide solution, e.g. by spray drying or by precipitation of droplets of polysaccharide solution in a suitable solvent, e.g. ethanol.

In a fourth aspect thereof, the present invention provides a process for protecting a substrate from contamination and facilitating removal of contamination therefrom, comprising the steps of:
a) providing an aqueous coating composition comprising at least one polysaccharide or a derivative thereof in aqueous solution and a plurality of polysaccharide gel particles,
b) applying the aqueous coating composition of a) to a substrate surface,
c) allowing the applied composition to dry to form a protective film on the substrate surface.

The process as outlined above resides in principal in proceeding from a polysaccharide solution, to an intermediate gel and to a solid film.

The composition provided in step a) of the process may be further defined as described above in respect of the first aspect of the invention.

The process makes use of the inherent advantageous features of the inventive composition in the formation of a protective film on a surface. The process according to the fourth aspect of the invention allows the formation on substrates of protective films having a sufficient thickness and stability towards water at room temperature with few coating applications or even a single coating application, significantly reducing the costs for protecting surfaces.

In step a) of the process, a composition as described in the first aspect of the invention is provided. In step b) the composition is applied to a surface which is to be protected from contamination. Upon evaporation of the solvent from the composition applied to the surface, there will be formed a gel which may finally be converted into a solid film. The resulting film may resist dissolution by water at room temperature, since treatment with water only results in swelling of the film to a gel, unless the temperature is increased so that the gel will be dissolved.

In a specific embodiment of the process of the invention, the application of the solution in step b) is performed in a single step. Single step application reduces costs and effort associated with the protection of surfaces. In another embodiment, the application of the solution in step b) is performed by spraying. In other examples, the application of the solution in step b) can be performed by brushing.

The thickness of the protective film formed according to the process of the present invention is important for the protective performance of the film. Generally, a film thickness of 1 µm may be sufficient for covering a smooth flat surface. However, most surfaces contain small or large irregularities, defects or pores, that may affect the film in such a way that the surface coverage of a thin film will not be satisfactory. Furthermore, on surfaces exposed for example to an outdoor environment, the protective film may be eroded by rain, wind and particles, and by contact with passers-by, such that the film thickness is decreased over time. It may therefore be generally desired to have a thicker protective film. A thicker film also provides better protection, e.g. against graffiti, since it increases the time required for a paint to diffuse through the protective film and reach the underlying substrate.

The present invention allows the application of films having a thickness of at least 20 µm in a single application step. Therefore, in an embodiment of the process of the invention, the protective film resulting from step c) has a thickness of at least 10 µm, preferably at least 20 µm on said substrate surface.

In an embodiment, the drying of step c) comprises heating the applied composition. Heating is preferably performed to a temperature at which the polysaccharide gel particles in the composition at least partially melt or dissolve. The composition may for example be heated to a temperature of 50°C or higher, such as a temperature of 60°C or higher, such as a temperature of 70°C or higher, such as to a temperature of 80°C or higher. The temperature is generally kept below 100°C or at least below a temperature at which a component of the composition may decompose. The heating can be performed before, during or after the drying step of the applied composition. Preferably, the heating is performed during the drying of the applied composition. Polysaccharide gel particles having a melting point, the heating temperature may preferably be above the melting temperature of the polysaccharide gel particles. The gel particles can then melt, fully or partly, and the composition may be partially or substantially homogenized.

In embodiments where the aqueous coating composition comprises a water-repellent substance, such as a wax, it may be advantageous to heat the composition above the melting temperature of the water-repellent substance.

The drying process of the film can be regulated by both time and temperature. If the film is preferred to dry during a short time, for example 4 minutes, the temperature may be higher than when time-delay is no problem.

A process according to the fourth aspect of the invention, may further comprise the steps of:
d) treating the film formed in step c) with a liquid capable of redissolving and/or swelling the film, and
e) removing contamination deposited on the film by complete or partial removal of the film from the substrate surface.

In one embodiment, the removal in the removal step (d and e) is provided by spraying, brushing, wiping, rubbing, washing or the like. The liquid may have an elevated temperature as compared to room temperature. In an embodiment, the temperature of the liquid is at least 30°C and preferably at least 40°C. In other examples, the temperature of the liquid is at least 50°C, such as at least 60°C. In a preferred embodiment, the liquid capable of re-dissolving and/or swelling the film is water at a temperature of about 40-60°C.

By complete or partial removal of the polysaccharide protective film from the surface which it covers, any contamination deposited on the film after it was applied may also be removed.

In order to further facilitate removal of the film, the liquid may be applied at elevated pressure, for example using a high pressure cleaning apparatus. In an embodiment of the present invention, the pressure is at least 10 bar, such as at least 20 bar. The pressure of the liquid may generally be in the range of 10-200 bars depending on the surface on which the protective film is deposited. Typically, the pressure of the liquid is lower than 150 bar when removing a film protecting the surface of a car.

The liquid capable of re-dissolving and/or swelling the film is preferably water-based, for example water.

A substrate may preferably be coated with a protective film obtained by the above mentioned process. The thickness of the protective film is preferably at least 20 µm. The substrate can be selected from a group consisting of concrete, metal, stone, glass, paper or wood. For example, the substrate can be a wall or an exterior of a vehicle. In other examples, the substrate is a plant. The substrate may also be a lacquer, paint or varnish coated surface, such as e.g. a vehicle body.

If the substrate onto which the inventive composition is applied is porous, the composition may enter the pores of said substrate to form an impregnated substrate. The inventive composition may also be used for impregnating a porous cloth, tissue or weave, for example cellulose based, such as a paper, to obtain a product with improved resistance to water. The porous material may preferably be susceptible to biodegradation. Such a polysaccharide impregnated cloth, tissue or weave is useful as a degradable material, e.g. as a so called mulch film, for covering the soil between desired plants in a plantation in order to reduce weed growth. The life time of the impregnated material may be extended by suspending the material above the ground such that the contact of the impregnated material with the soil is reduced or eliminated. When the material is no longer required, degradation may be accelerated by increasing the contact of the impregnated material with the soil. The inventive material thus provides an efficient and environmentally friendly alternative to herbicides. Another advantage of the impregnated material is that it allows water, e.g. from rain or artificial irrigation, to pass through the material. Many prior art materials are plastic based and do not allow passage of water. The amount of polysaccharide in the impregnated material may be varied within a wide range depending on the required properties of the impregnated material and the specific composition used. The impregnated material may comprise an amount of polysaccharide which is higher than or lower than or substantially equal to the amount of the porous material based on dry weight.

Thus, there is also described a porous material impregnated with an aqueous coating composition as defined hereinabove comprising polysaccharide gel and, optionally, wax particles. The porous material may preferably be cellulose based. In an embodiment, the porous material is paper. In a more specific embodiment the impregnated material is a tissue paper impregnated with a composition according to the present invention comprising at least one polysaccharide or a derivative thereof in aqueous solution, a plurality of polysaccharide gel particles and at least one water repellent substance which is semisolid or solid at 20 °C. In an embodiment, the dry weight ratio between the porous material and the solids in the impregnated material is in the range of from 10:1 to 1:10, preferably 10:1 to 1:2. In an more specific embodiment, the dry weight ratio between the porous material and the solids in the impregnated material is in the range of from 2:1 to 1:2. The composition used for impregnating the porous material may also further comprise a pigment, such as carbon black, to reduce the transparency to sunlight of the material.

### Itemized listing of embodiments

The following is a non-limiting and itemized listing of embodiments of the present disclosure, presented for the purpose of describing various features and combinations provided by the invention in certain of its aspects.

Items:
1. An aqueous coating composition comprising a mixture of
   (i) at least one polysaccharide or a derivative thereof in aqueous solution, and
   (ii) a plurality of polysaccharide gel particles,
      said composition being capable of forming a film when applied onto a substrate.
2. An aqueous coating composition according to item 1, capable of forming said film via at least partial gel formation.
3. An aqueous coating composition according to any one of preceding items, capable of forming said film by evaporation of aqueous solvent.
4. An aqueous coating composition according to any one of preceding items, wherein said film is removable by a stream of water at a temperature of at least 40°C and/or at an increased pressure.
5. An aqueous coating composition according to any one of preceding items, wherein the at least one polysaccharide or a derivative thereof in aqueous solution and the polysaccharide gel particles are capable of attractive interaction with each other.
6. An aqueous coating composition according to item 5, wherein said attractive interaction is selected from the group consisting of covalent bonding, ionic bonding, electrostatic forces, dipole-dipole interaction, London dispersion forces, and hydrogen bonding.
7. An aqueous coating composition according to items 4-5, wherein said attractive interaction is selected from the group consisting of electrostatic forces and hydrogen bonding.
8. An aqueous coating composition according to any one of preceding items, wherein the concentration of polysaccharides in aqueous solution is in the range of 0.1-10% (w/v), preferably 1-5% (w/v).
9. An aqueous coating composition according to any of the preceding items, wherein the volume of polysaccharide gel particles in the composition constitutes in the range of 10%-90% of the total volume of the composition, when the polysaccharide gel particles are fully swelled.
10. An aqueous coating composition according to any one of the preceding items, wherein the concentration of polysaccharides in the plurality of polysaccharide particles is in the range of 0.1-5% (w/v), preferably 1-2% (w/v).
11. An aqueous coating composition according to any one of the preceding items, wherein the polysaccharide or derivative thereof in aqueous solution is selected from the group consisting of algal, microbial and plant derived polysaccharides, and mixtures thereof.
12. An aqueous coating composition according to item 10, wherein the polysaccharide or derivative thereof in aqueous solution is selected from the group consisting of agar, carrageenans, gellan gum, pectins, locust bean gum, guar gum, esparto xylan, arabinoxylan, konjac mannan, hydroxyethyl cellulose, starch or derivatives thereof, alginic acid, chitosan, chitin, methylcarboxymethyl cellulose and acetyl cellulose and mixtures thereof.
13. An aqueous coating composition according to any one of items 11-12, wherein the polysaccharide or derivative thereof in aqueous solution is a mixture of agar with guar gum, locust bean gum and/or xanthan gum.
14. An aqueous coating composition according to any one of items 12-13, wherein the polysaccharide or derivative thereof in aqueous solution is a mixture of agar with guar gum and/or locust bean gum.
15. An aqueous coating composition according to any one of the preceding items, wherein the polysaccharide gel particles are selected from the group consisting of gel particles of algal, microbial and plant derived polysaccharides, and mixtures thereof.
16. An aqueous coating composition according to item 15, wherein the polysaccharide gel particles are selected from the group consisting of gel particles of agar, carrageenans, gellan gum, pectins, locust bean gum, guar gum, esparto xylan, arabinoxylan, konjac mannan, hydroxyethyl cellulose, starch or derivatives thereof, calcium alginate, chitosan, chitin, methylcarboxymethyl cellulose, acetyl cellulose, and mixtures thereof.
17. An aqueous coating composition according to any one of items 15-16, wherein the polysaccharide gel particles are particles of a mixture of agar with guar gum and/or locust bean gum.
18. An aqueous coating composition according to any one of preceding items, wherein the polysaccharide gel particles have a mean average diameter in the aqueous composition of about 1 µm-5 mm, such as about 10 µm-1 mm, or such as about 50 µm-500 µm.
19. An aqueous coating composition according to any one of the preceding items, further comprising at least one polymeric polyamino compound.
20. An aqueous coating composition according to item 19, wherein said polymeric polyamino compound is selected from proteins, polysaccharides and derivatives thereof containing amino functions, and aliphatic polymers containing amino functions.
21. An aqueous coating composition according to any one of items 19-20, wherein said polymeric polyamino compound is a soluble cellulose or starch derivative containing amino functions.
22. An aqueous coating composition according to any one of items 19-21, wherein said polymeric polyamino compound is chitosan or an aliphatic polymer containing amino functions.
23. An aqueous coating composition according to any one of items 19-22, wherein said polymeric polyamino compound is polyethylene imine.
24. An aqueous coating composition according to any one of items 19-23, wherein the concentration of polymeric polyamino compound in the composition is in the range of 1-10% (w/v), preferably 1-5% (w/v).
25. An aqueous coating composition according to any one of the preceding items, further comprising a water-repellent substance which is semisolid or solid at 20°C.
26. An aqueous coating composition according to item 25, wherein said water-repellent substance has a melting point of 30°C or higher, such as 40°C or higher, such as 50°C or higher or such as 60°C or higher.
27. An aqueous coating composition according to any one of items 25-26, wherein said water-repellent substance is selected from the group consisting of waxes and fats, preferably waxes.
28. An aqueous coating composition according to any one of items 25-27, wherein the water-repellent substance is selected from animal waxes, vegetable waxes, mineral waxes and synthetic waxes, and mixtures thereof.
29. An aqueous coating composition according to any one of items 25-28, wherein the water-repellent substance is microcrystalline wax.
30. An aqueous coating composition according to any one of items 25-29, wherein the water-repellent substance is present as dispersed particles in the composition.
31. An aqueous coating composition according to any one of the preceding items, further comprising a buffering system.
32. An aqueous coating composition according to item 31, wherein said buffering system comprises a low molecular weight buffering compound.
33. An aqueous coating composition according to any one of items 31-32, wherein the amount of said buffering system is within the range of about 2% (w/v) to about 5% (w/v).
34. An aqueous coating composition according to any one of items 31-33, wherein the pH of the composition is within the range of from about 5 to about 9.
35. An aqueous coating composition according to any one of the preceding items, further comprising at least one additive selected from the group consisting of an anti-foaming agent, a plasticizer, a surfactant and an antimicrobial agent.
36. An aqueous coating composition according to item 35, wherein said plasticizer is selected from the group consisting of glycerols, polyglycerols, dimethylsulphoxide, and formamide.
37. An aqueous coating composition according to any one of the preceding items, further comprising a herbicide, insecticide, bactericide, and/or fungicide.
38. Use of an aqueous coating composition as defined in any one of the preceding items for protecting a substrate from contamination and facilitating removal of contamination therefrom.
39. Use of an aqueous coating composition as defined in any one of items 1-37 for temporary protection of the exterior of a vehicle during handling and transportation.
40. Use of an aqueous coating composition as defined in any one of items 1-37 for the protection of plant seedlings from microbial or insect attack.
41. A process for the preparation of an aqueous coating composition suitable for protection of surfaces comprising the steps of
   a) dissolving a least one polysaccharide or a derivative thereof in aqueous solution;
   b) preparing a plurality of polysaccharide gel particles;
   c) adding the plurality of polysaccharide gel particles to the aqueous solution of at least one polysaccharide or a derivative thereof; and
   d) mixing the at least one polysaccharide or a derivative thereof in aqueous solution with the plurality of polysaccharide gel particles, and optionally other components.
42. A process according to item 41, wherein the aqueous coating composition is further defined as in any one of items 1-37.
43. A process for protecting a substrate from contamination and facilitating removal of contamination therefrom, comprising the following steps:
   a) providing an aqueous coating composition as defined in any one of items 1-37,
   b) applying the aqueous coating composition of a) to a substrate surface,
   c) allowing the applied composition to dry to form a protective film on said substrate surface.
44. A process according to item 43, wherein the application of the solution in step b) is performed as a single application.
45. A process according to any one of items 43-44, wherein the application of the solution in step b) is performed by spraying.
46. A process according to any one of items 43-45, wherein the protective film resulting from step c) has a thickness of at least 20 µm on said substrate surface.
47. A process according to any one of items 43-46, wherein the drying of step c) comprises heating the applied composition to a temperature at which the polysaccharide gel particles at least partially dissolve or melt.
48. A process according to any one of items 43-47, wherein the drying of step c) comprises heating the applied composition to a temperature of 50°C or higher.
49. A process according to item 48, wherein the temperature of step c) is 60°C or higher, such as 70°C or higher, such as 80°C or higher.
50. A process according to any one of items 43-49, further comprising the steps of:
   d) treating the film formed in step c) with a liquid capable of redissolving and/or swelling the film, and
   e) removing contamination deposited on the film by complete or partial removal of the film from the substrate surface.
51. A process according to item 50, wherein under the removal step (d and e) said removal is provided by spraying, brushing, wiping, rubbing, washing or the like.
52. A process according to any one of items 50-51, wherein said liquid in step d) has a temperature of at least 30°C, such as at least 40°C, such as at least 50°C, such as at least 60°C.
53. A process according to any one of items 50-52, wherein said liquid in step d) is provided at an increased pressure.
54. A process according to item 53, wherein said pressure is at least 10 bar, such as at least 20 bar.
55. A process according to any one of items 50-54, wherein said liquid is water.

The invention will in the following be further illustrated by non-limiting examples, wherein percentages are given in weight by volume unless otherwise indicated.

### Examples

In the following non-limiting examples, compositions according to embodiments of the invention are prepared and tested.

### Example 1. Polysaccharide solution with polysaccharide gel particles

To a powder mixture of Guar gum (15 g) and Locust bean gum (5 g) was added ethanol (50 ml) with mixing. To the resulting thick slurry was added water (1000 ml) under vigorous stirring. the resulting mixture was heated to 90 °C in a microwave oven with occasional mixing. The resulting thick solution was cooled to 60 °C and Polymin P (BASF AG)(25% w/v in water) (75 ml) was added under stirring. Then glycine (10 g), glycerol (40 g), methylparaben (1 g) and a neutral tenside (1 g) were added under stirring. The resulting solution was cooled to room temperature. The resulting pH of the polysaccharide solution was 7.0.

Separately polysaccharide gel particles were prepared as follows.
Agar (30 g) was suspended in water (1000 ml) and the suspension was heated to 90 °C and the resulting solution was allowed to cool to 60 °C when glycine (40 g) was added under stirring. The resulting solution was kept at 4 °C for 18 hours. The resulting block of polysaccharide gel was minced into small particles using a high speed cutter to obtain polysaccharide particles with a mean average diameter of about 100 µm.

The polysaccharide particles were then added at room temperature to the polysaccharide solution and a suspension of polysaccharide particles in the polysaccharide solution was obtained. The suspension was evaluated according to methods a to e below.

### a.

The suspension was sprayed onto a concrete surface (0.25 L/m²) and allowed to dry at room temperature (4 hours). The stability of the film was tested in a climate chamber using the sequence rain (4 hours, 200 mm) and dry period (8 hours) at room temperature. The sequence was repeated 50 times. The coating remained essentially intact after the rain sequences.

### b.

The suspension was sprayed onto a concrete surface (0.25 L/m²) and allowed to dry at room temperature (4 hours). Spray paint and felt pen graffiti was applied onto the coated surface and allowed to dry for 1 week. Using 50 °C water at 60 bars of pressure the applied graffiti could easily be removed along with the coating.

### c.

To suspension was added 1% of cypermethrin in vegetable oil (10% w/v) under vigorous stirring. The resulting suspension was applied to conifer seedlings, and after drying the seedlings were planted in an area heavily infested with pine weevils (Hylobius abietis). After 6 months the treated seedlings were essentially intact whereas 70% of the untreated control seedlings were dead (ring barked by the pine weevil).

### d.

The suspension, mixed with 2% (w/v) carbon powder, was sprayed onto TAD (through-air-dried) tissue (SCA, Sweden) 20.5 g/m². After drying, the black composite paper tissue was used as a mulch film. Some shrinking of the film was observed upon drying of the suspension. The mulch film was put onto a bed of soil in a greenhouse garden. No weeds could penetrate the film whereas plants put in openings of the film developed properly. Irrigating water passed easily through the film. If the film was buried into the ground it was broken down completely within 1 month.

### e.

The suspension was applied to newly lacquered test plates (0.25 L/m²) and the coated plates were force dried at 80-90 °C using an infrared heating system for 5 min. The resulting film became tough and water resistant.

The coating was tested according to tests specified by the Ford company including showering with water, acid and alkaline tests and tests with regards to protection against petrol ,oil and wind-shield wiper liquids and it was found that the protective coating performed well as no damages could be recorded on the lacquered surface after removal of the coating with high pressure water (50 °C, 60 bars of pressure).

### Example 2. Polysaccharide solution with polysaccharide gel particles

Example 2 was performed similarly to Example 1 but with the following differences in the polysaccharide solution:

To a powder mixture of Locust bean gum (15 g) and agar (0.1 g) was added 50 ml of ethanol and the slurry was mixed. Water (1 L) was added under stirring and the mixture was heated to 95 °C. The resulting solution was allowed to cool to room temperature. At 60 °C methyl paraben (1 g) and sodium bisulphite (0.12 g) was added. At 40 °C Lupasol SK, BASF AG (24% in water, ph 7.0, 25 g) and a neutral tenside (10 g) was added.

Separately agar gel particles (1 L) were produced (see Example 1) and mixed with the solution above.

The resulting product was tested according to the procedures in Example 1 (a-e). The results were similar to results obtained in Example 1.

### Example 3. Polysaccharide solution with polysaccharide gel particles and wax particles,

1 L of the product from Example 1 was mixed with a water suspension of microcrystalline wax (10% w/v)(1 L) with a melting point of 60-80 °C. The resulting suspension was then tested according to tests described in Example 1 (a-e).

The results were similar to the results in Example 1 except that the coating became water repellent. Furthermore, shrinking of the film which was noticed in Example 1 d and e was greatly reduced.

### Example 4. Polysaccharide solution with polysaccharide gel particles and wax particles

The product from Example 1 (1 L) was heated to 65 °C. To the warm solution melted beeswax (50 g) was added under vigorous stirring. The resulting emulsion was allowed to cool to room temperature and a suspension was formed.

The resulting product was tested according to the procedures in Example 1 (a-e). The results were similar to the results obtained in Example 3 except that the coating became hydrophobic.

### Example 5. Polysaccharide solution with polysaccharide gel particles

To a solution of potato amylopectin (PAP) (1 litre, 6%, w/v) was added Polymin P (BASF AG)(25% w/v in water) (75 ml) under stirring. Then glycine (10 g), glycerol (40 g), methylparaben (1 g) and a neutral tenside (1 g) were added under stirring. The resulting solution was cooled to room temperature. The resulting pH of the polysaccharide solution was 7.0.

To the polysaccharide solution was added particles (1:1, v/v) of polysaccharide gel particles prepared from alginate gel. The alginate gel was prepared by mixing an aqueous solution of sodium alginate with an aqueous solution of calcium chloride (1%, w/w).

The resulting mixture was tested according to the methods described in Example 1. The results of the tests were essentially the same as in Example 1.

### Example 6. Polysaccharide solution with polysaccharide gel particles and wax particles

1 L of a composition prepared according to Example 5 was heated to 65 °C and melted beeswax (50 g) was added under vigorous stirring. The resulting emulsion was allowed to cool to room temperature and a suspension was formed.

The resulting preparation was tested according to the methods described in Example 1. The results of the tests were essentially the same as described for the preparation in Example 4.

## Claims

1. An aqueous coating composition comprising a mixture of
(i) at least one polysaccharide or a derivative thereof in aqueous solution, and
(ii) a plurality of polysaccharide gel particles having a mean average diameter in the range of 1 µm - 5 mm,
said composition being capable of forming a film when applied onto a substrate, wherein the concentration of polysaccharides in aqueous solution is in the range of 0.1-10% (w/v) and the volume of the polysaccharide gel particles in the composition constitutes in the range of 10%-90% of the total volume of the composition when the polysaccharide gel particles are fully swelled.

2. An aqueous coating composition according to claim 1, capable of forming said film via at least partial gel formation.

3. An aqueous coating composition according to any one of preceding claims, wherein said film is removable by a stream of water at a temperature of at least 40°C and/or at an increased pressure.

4. An aqueous coating composition according to any one of preceding claims, wherein the concentration of polysaccharides in aqueous solution is in the range of 1-5% (w/v).

5. An aqueous coating composition according to any one of preceding claims, wherein the concentration of polysaccharides in the plurality of polysaccharide gel particles is in the range of 0.1-5% (w/v), preferably 1-2% (w/v).

6. An aqueous coating composition according to any one of preceding claims, wherein the polysaccharide or derivative thereof in aqueous solution is selected from the group consisting of algal, microbial and plant derived polysaccharides, and mixtures thereof.

7. An aqueous coating composition according to any of preceding claims, wherein the plurality of polysaccharide gel particles are selected from the group consisting of gel particles of algal, microbial and plant derived polysaccharides, and mixtures thereof.

8. An aqueous coating composition according to any one of preceding claims, further comprising a water-repellent substance which is semisolid or solid at 20°C.

9. An aqueous coating composition according to claim 8, wherein said substance is selected from the group consisting of waxes and fats.

10. An aqueous coating composition according to any one of preceding claims, further comprising a buffering system.

11. Use of an aqueous coating composition as defined in any one of the preceding claims for protecting a substrate from contamination and facilitating removal of contamination therefrom.

12. Use of an aqueous coating composition as defined in any one of claims 1-10 for temporary protection of the exterior of a vehicle during handling and transportation.

13. A process for the preparation of an aqueous coating composition suitable for protection of surfaces comprising the steps of
a) dissolving a least one polysaccharide or a derivative thereof in aqueous solution to a concentration in the range of 0.1-10% (w/v);
b) preparing a plurality of polysaccharide gel particles having a mean average diameter in the range of 1 µm - 5 mm;
c) adding the plurality of polysaccharide gel particles to the aqueous solution of at least one polysaccharide or a derivative thereof until the volume of the polysaccharide gel particles in the composition constitutes in the range of 10%-90% of the total volume of the composition when the polysaccharide gel particles are fully swelled; and
d) mixing the at least one polysaccharide or a derivative thereof in aqueous solution with the plurality of polysaccharide gel particles, and optionally other components.

14. A process for protecting a substrate from contamination and facilitating removal of contamination therefrom, comprising the following steps:
a) providing an aqueous coating composition as defined in any one of claims 1-10;
b) applying the aqueous coating composition of a) to a substrate surface; and
c) allowing the applied composition to dry to form a protective film on said substrate surface.

15. A process according to claim 14, wherein the application of the solution in step b) is performed as a single application.

16. A process according to any one of claims 14-15, further comprising the steps of:
d) treating the film formed in step c) with a liquid capable of redissolving and/or swelling the film; and
e) removing contamination deposited on the film by complete or partial removal of the film from the substrate surface.

## Patentansprüche

1. Wässrige Beschichtungszusammensetzung, umfassend eine Mischung von
(i) mindestens einem Polysaccharid oder einem Derivat davon in wässriger Lösung und
(ii) mehreren Polysacchardigelteilchen mit einem mittleren durchschnittlichen Durchmesser im Bereich von 1 µm-5mm,
wobei die Zusammensetzung beim Auftragen auf ein Substrat zur Bildung eines Films befähigt ist, wobei die Polysaccharid-Konzentration in wässriger Lösung im Bereich von 0,1-10% (w/v) liegt und das Volumen der Polysaccharidgelteilchen bei vollständiger Quellung der Polysaccharidgelteilchen im Bereich von 10-90% des Gesamtvolumens der Zusammensetzung ausmacht.

2. Wässrige Beschichtungszusammensetzung nach Anspruch 1, die durch zumindest teilweise Gelbildung zur Bildung des Films befähigt ist.

3. Wässrige Beschichtungszusammensetzung nach einem der vorhergehenden Ansprüche, wobei der Film durch einen Wasserstrom bei einer Temperatur von mindestens 40°C und/oder bei einem erhöhten Druck entfernbar ist.

4. Wässrige Beschichtungszusammensetzung nach einem der vorhergehenden Ansprüche, wobei die Polysaccharid-Konzentration in wässriger Lösung im Bereich von 1-5% (w/v) liegt.

5. Wässrige Beschichtungszusammensetzung nach einem der vorhergehenden Ansprüche, wobei die Polysaccharid-Konzentration in den mehreren Polysaccharidgelteilchen im Bereich von 0,1-5% (w/v), vorzugsweise 1-2% (w/v), liegt.

6. Wässrige Beschichtungszusammensetzung nach einem der vorhergehenden Ansprüche, wobei das Polysaccharid oder Derivat davon in wässriger Lösung aus der Gruppe bestehend aus von Algen, Mikroben und Pflanzen abgeleiteten Polysacchariden und Mischungen davon ausgewählt ist.

7. Wässrige Beschichtungszusammensetzung nach einem der vorhergehenden Ansprüche, wobei die mehreren Polysaccharidgelteilchen aus der Gruppe bestehend aus Gelpartikeln aus von Algen, Mikroben und Pflanzen abgeleiteten Polysacchariden und Mischungen davon ausgewählt ist.

8. Wässrige Beschichtungszusammensetzung nach einem der vorhergehenden Ansprüche, ferner umfassend eine wasserabstoßende Substanz, die bei 20°C halbfest oder fest ist.

9. Wässrige Beschichtungszusammensetzung nach Anspruch 8, wobei die Substanz aus der Gruppe bestehend aus Wachsen und Fetten ausgewählt ist.

10. Wässrige Beschichtungszusammensetzung nach einem der vorhergehenden Ansprüche, ferner umfassend ein Puffersystem.

11. Verwendung einer wässrigen Beschichtungszusammensetzung nach einem der vorhergehenden Ansprüche zum Schützen eines Substrats vor Kontamination und Erleichtern der Entfernung von Kontamination davon.

12. Verwendung einer wässrigen Beschichtungszusammensetzung nach einem der Ansprüche 1-10 zum vorübergehenden Schützen des Äußeren eines Fahrzeugs bei der Handhabung und beim Transport.

13. Verfahren zur Herstellung einer zum Schützen von Oberflächen geeigneten wässrigen Beschichtungszusammensetzung, bei dem man
a) mindestens ein Polysaccharid oder ein Derivat davon in einer wässrigen Lösung bis zu einer Konzentration im Bereich von 0,1-10% (w/v) löst;
b) mehrere Polysaccharidgelteilchen mit einem mittleren durchschnittlichen Durchmesser im Bereich von 1 µm-5 mm herstellt;
c) die mehreren Polysaccharidgelteilchen zu der wässrigen Lösung von mindestens einem Polysaccharid oder einem Derivat davon gibt, bis das Volumen der Polysaccharidgelteilchen bei vollständiger Quellung der Polysaccharidgelteilchen im Bereich von 10-90% des Gesamtvolumens der Zusammensetzung ausmacht; und
d) das mindestens eine Polysaccharid oder ein Derivat davon in wässriger Lösung mit den mehreren Polysaccharidgelteilchen und gegebenenfalls anderen Komponenten mischt.

14. Verfahren zum Schützen eines Substrats vor Kontamination und Erleichtern der Entfernung von Kontamination davon, bei dem man:
a) eine wässrige Bechichtungszusammensetzung gemäß einem der Ansprüche 1-10 bereitstellt;
b) die wässrige Beschichtungszusammensetzung aus a) auf eine Substratoberfläche aufbringt und
c) die aufgebrachte Zusammensetzung zur Bildung eines Schutzfilms auf der Substratoberfläche trocknen lässt.

15. Verfahren nach Anspruch 14, bei dem man das Aufbringen der Lösung in Schritt b) in einer einzigen Applikation durchführt.

16. Verfahren nach einem der Ansprüche 14-15, bei dem man ferner:
d) den in Schritt c) gebildeten Film mit einer Flüssigkeit, die zum Wiederauflösen und/oder Quellen des Films befähigt ist, behandelt und
e) auf dem Film abgeschiedene Kontamination durch vollständige oder teilweise Entfernung des Films von der Substratoberfläche entfernt.

## Revendications

1. Composition aqueuse de revêtement comprenant un mélange de
(i) au moins un polysaccharide ou un dérivé de celui-ci en solution aqueuse, et
(ii) une pluralité de particules de gel de polysaccharide ayant un diamètre moyen dans la gamme de 1 µm - 5 mm,
ladite composition étant susceptible de former un film lorsqu'elle est appliquée sur un substrat, la concentration de polysaccharides en solution aqueuse se situant dans la gamme de 0,1-10% (m/V) et le volume des particules de gel de polysaccharide dans la composition constituant entre 10% et 90% du volume total de la composition quand les particules de gel de polysaccharide sont complètement gonflées.

2. Composition aqueuse de revêtement selon la revendication 1, susceptible de former ledit film par formation au moins partielle de gel.

3. Composition aqueuse de revêtement selon l'une quelconque des revendications précédentes, ledit film étant retirable par un courant d'eau à une température d'au moins 40°C et/ou à une pression accrue.

4. Composition aqueuse de revêtement selon l'une quelconque des revendications précédentes, la concentration de polysaccharides en solution aqueuse se situant dans la gamme de 1-5 % (m/V).

5. Composition aqueuse de revêtement selon l'une quelconque des revendications précédentes, la concentration de polysaccharides dans la pluralité de particules de gel de polysaccharide se situant dans la gamme de 0,1-5% (m/V), de préférence 1-2 % (m/V).

6. Composition aqueuse de revêtement selon l'une quelconque des revendications précédentes, le polysaccharide ou son dérivé en solution aqueuse étant choisi dans le groupe constitué par les polysaccharides algaux, microbiens et d'origine végétale, et les mélanges de ceux-ci.

7. Composition aqueuse de revêtement selon l'une quelconque des revendications précédentes, la pluralité de particules de gel de polysaccharide étant choisie dans le groupe constitué par les particules de gel de polysaccharides algaux, microbiens et d'origine végétale, et des mélanges de ceux-ci.

8. Composition aqueuse de revêtement selon l'une quelconque des revendications précédentes, comprenant en outre une substance hydrofuge qui est semi-solide ou solide à 20°C.

9. Composition aqueuse de revêtement selon la revendication 8, ladite substance étant choisie dans le groupe constitué par les cires et les graisses.

10. Composition aqueuse de revêtement selon l'une quelconque des revendications précédentes, comprenant en outre un système tampon.

11. Utilisation d'une composition aqueuse de revêtement telle que définie dans l'une quelconque des revendications précédentes pour protéger un substrat de la contamination et faciliter le retrait de la contamination de celui-ci.

12. Utilisation d'une composition aqueuse de revêtement telle que définie dans l'une quelconque des revendications 1 à 10 pour la protection temporaire de l'extérieur d'un véhicule pendant la manutention et le transport.

13. Procédé de préparation d'une composition aqueuse de revêtement appropriée pour la protection de surfaces comprenant les étapes consistant à
a) dissoudre au moins un polysaccharide ou un dérivé de celui-ci dans une solution aqueuse jusqu'à une concentration dans la gamme de 0,1-10 % (m/V) ;
b) préparer une pluralité de particules de gel de polysaccharide ayant un diamètre moyen dans la gamme de 1 µm - 5 mm ;
c) ajouter la pluralité de particules de gel de polysaccharide à la solution aqueuse d'au moins un polysaccharide ou d'un dérivé de celui-ci jusqu'à ce que le volume des particules de gel de polysaccharide dans la composition constitue entre 10 % et 90 % du volume total de la composition quand les particules de gel de polysaccharide sont complètement gonflées ; et
d) mélanger l'au moins un polysaccharide ou un dérivé de celui-ci en solution aqueuse avec la pluralité de particules de gel de polysaccharide, et éventuellement d'autres composants.

14. Procédé pour protéger un substrat de la contamination et faciliter le retrait de la contamination de celui-ci, comprenant les étapes suivantes :
a) se procurer une composition aqueuse de revêtement telle que définie dans l'une quelconque des revendications 1 à 10 ;
b) appliquer la composition aqueuse de revêtement de a) à une surface du substrat ; et
c) laisser sécher la composition appliquée pour former un film protecteur sur ladite surface du substrat.

15. Procédé selon la revendication 14, dans lequel l'application de la solution à l'étape b) est effectuée en une seule application.

16. Procédé selon l'une quelconque des revendications 14 et 15, comprenant en outre les étapes consistant à :
d) traiter le film formé à l'étape c) avec un liquide susceptible de redissoudre et/ou faire gonfler le film ; et
e) retirer la contamination déposée sur le film par retrait complet ou partiel du film de la surface du substrat.
